(19)

Europäisches
Patentamt

European
Patent Office

Office européen
des brevets

(11)     **EP 3 025 206 B1**

(12)                         **EUROPEAN PATENT SPECIFICATION**

(45) Date of publication and mention
of the grant of the patent:
**06.09.2017 Bulletin 2017/36**

(21) Application number: **14771380.4**

(22) Date of filing: **23.07.2014**

(51) Int Cl.:
***G05D 1/02*** (2006.01)

(86) International application number:
**PCT/IB2014/063349**

(87) International publication number:
**WO 2015/011661 (29.01.2015 Gazette 2015/04)**

(54) **DEVICE AND METHOD FOR OPTIMISING THE MOVEMENT OF AUTOMATED-GUIDED VEHICLES**

VORRICHTUNG UND VERFAHREN ZUR OPTIMIERUNG DER BEWEGUNG VON AUTOMATISCH
GELENKTEN FAHRZEUGEN

DISPOSITIF ET PROCÉDÉ POUR OPTIMISER LE MOUVEMENT DE VÉHICULES AUTOGUIDÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.07.2013 IT VR20130178**

(43) Date of publication of application:
**01.06.2016 Bulletin 2016/22**

(73) Proprietor: **Elettric 80 S.p.A.**
**42030 Viano, Reggio Emilia (IT)**

(72) Inventors:
• **OLMI, Roberto**
**42030 Viano (RE) (IT)**
• **DI TERLIZZI, Domenico**
**42030 Viano (RE) (IT)**
• **DABBENE, Fabrizio**
**10129 Torino (IT)**
• **DELLA CROCE, Federico**
**10129 Torino (IT)**
• **GHIRARDI, Marco**
**10129 Torino (IT)**
• **SACCO, Nicola**
**16126 Genova (IT)**

(74) Representative: **Feltrinelli, Secondo Andrea**
**APTA S.r.l.**
**Patent Department**
**Via Ca' di Cozzi, 41**
**37124 Verona (IT)**

(56) References cited:
• **NISHI T ET AL: "A distributed route planning
method for multiple mobile robots using
lagrangian decomposition technique",
PROCEEDINGS / 2003 IEEE INTERNATIONAL
CONFERENCE ON ROBOTICS AND
AUTOMATION : SEPTEMBER 14 - 19, 2003, THE
GRAND HOTEL, TAIPEI, TAIWAN;
[PROCEEDINGS OF THE IEEE INTERNATIONAL
CONFERENCE ON ROBOTICS AND
AUTOMATION], IEEE SERVICE CENTER,
PISCATAWAY, NJ, vol. 3, 14 September 2003
(2003-09-14), pages 3855-3861, XP010668326,
DOI: 10.1109/ROBOT.2003.1242188 ISBN:
978-0-7803-7736-3**
• **DAMJAN MIKLIC ET AL: "A modular control
system for warehouse automation - algorithms
and simulations in USARSim", ROBOTICS AND
AUTOMATION (ICRA), 2012 IEEE
INTERNATIONAL CONFERENCE ON, IEEE, 14
May 2012 (2012-05-14), pages 3449-3454,
XP032450625, DOI: 10.1109/ICRA.2012.6224894
ISBN: 978-1-4673-1403-9**

**Description**

TECHNICAL FIELD OF THE INVENTION

The present invention concerns a device and a method for optimising the movement of automated-guided vehicles, and the like.

In particular, the present invention concerns a device and a method that makes it possible to optimise the movement of automated-guided vehicles used for example in various kinds of warehouses for transporting articles, so as to improve the routes that the vehicles must follow to reach the different stations, decreasing the transportation times of the articles, and preventing the creation of jams along the routes themselves.

STATE OF THE PRIOR ART

In various fields it is common to use automated-guided vehicles, such vehicles also being called AGV in its abbreviated form from the English words Automated Guided Vehicle. Such vehicles are for example widely used in various kinds of industrial warehouses for transporting articles of all kinds inside the warehouse.

The articles for which AGVs are used can belong to different fields such as the ceramic field, the food field, the so-called *beverage* field, i.e. bottles, cans and the like, the so-called *tissue* field, i.e. rolls of paper in general and the like, the mechanical field for moving semi-worked products and finished pieces, etc..

Such automated-guided vehicles can be of various types, and all cases a role of primary importance is the management of the routes followed by them, so as to execute the assigned missions - for example transporting articles between the various stations - with efficiency and speed.

Known devices for managing the routes of automated-guided vehicles comprise, amongst other things, a so-called connection graph, i.e. a scheme of the possible routes through which the vehicles must be guided.

The scheme of the routes consists of a certain number of nodes and segments that connect the nodes themselves.

In order to prepare the routes for the automated-guided vehicles, it is necessary to take into consideration the presence of certain constraints, the first of which is that a segment can be assigned to an AGV only if:

other vehicles are not on the same segment;
no other vehicle is on segments with the same destination node.

It should also be kept in mind that a vehicle is not a point, thus due to the bulk of the vehicle it may be the case that a segment can be incompatible with some of the nearby segments and nodes.

In particular, such incompatibility is verified by calculating - usually through a CAD program - the shape of the area covered by the vehicle while it travels on each segment and being positioned in each node.

Therefore, for each segment the whole size is calculated, i.e. the whole of the segments and nodes for which the calculated shape intersects with the shape of the segment considered.

These sizes, hereafter called incompatible segments and nodes, are defined as block sizes for the segment considered.

Therefore, further constraints foresee that a predetermined segment can be assigned to a vehicle only if:

no block segment for the predetermined segment has been assigned to another vehicle;
no segment that ends on a block node for the predetermined segment has been assigned to another vehicle;
no vehicle is on a block node for the predetermined segment.

Moreover, each time a vehicle leaves a node a certain time is needed to actually free up the node itself, because the entire shape in plan of the vehicle must actually leave the node.

Therefore, each segment has a release point, which is precisely the point of the segment that must be passed by a vehicle before the node can be declared free and can be engaged by another vehicle.

Therefore, a second constraint to be assigned is that:

no vehicle is on a segment that starts from a block node for the predetermined segment, but has not passed its release point.

Finally, all those situations in which the AGVs, although not violating any of the constraints described above, are located in positions such as to prevent each other from moving, are then identified. Such situations, which clearly occur if we consider one-directional segments, are generally called *deadlocks,* i.e. AGV holdups or blocks.

An analogous condition occurs when the vehicles are in situations in which only movements that periodically take the AGVs back into the same positions are possible. In this case, the AGVs are not stopped from moving, but are still in a deadlock situation, because as stated above, the AGVs can move, but periodically go back into the same positions. These situations are called *livelocks.* However, known devices and methods for managing the routes of automated-guided vehicles are limited to simply avoiding interference or collisions between the different automated-guided vehicles, but do not ensure quick and optimal use of the vehicles, consequently resulting in losses of the time necessary to transport articles and basically also causing an economic loss.

The article "A distributed route planning method for multiple mobile robots using lagrangian decomposition technique" to Nishi et al. and concerning the International Conference about Robotics and Automation held in Taiwan on September 2003, as well as the article "A modular control system for warehouse automation - algorithms and simulations in USARSim" to Damjan Miklic et al. and concerning the International Conference about Robotics and Automation held in Minnesota on May 2012 teach respective solutions according to the state of the art.

PURPOSES OF THE INVENTION

The purpose of the present invention is therefore to propose a device and a method for optimising the movement of automated-guided vehicles, and the like, which improves the routes that the vehicles must follow to reach the different stations to carry out the assigned missions, so as to decrease the times necessary for example for the transportation of articles between the different stations, and preventing interference from being caused between the automated-guided vehicles along the routes themselves, especially in the case in which a large number of automated-guided vehicles is used.

A particular purpose of the present invention is to make a device and method for optimising the movement of automated-guided vehicles, and the like, which allows the total nominal travel time of all of the routes carried out by the whole vehicle fleet in a certain area or warehouse to be decreased, thus obtaining a saving, not just of time, but also of money.

The nominal travel time is defined as the sum of the nominal travel times of each segment of the route, determined as the ratio between the length and the nominal speed of the vehicle on each segment.

This purpose is accomplished by the device for optimising the movement of automated-guided vehicles, and the like, according to claim 1.

This purpose is also achieved by the method for optimising the movement of automated-guided vehicles, and the like, according to claim 15. Further advantageous characteristics are described in the dependent claims.

BRIEF DESCRIPTION OF THE DRAWINGS.

The characteristics of the invention will become clearer to any man skilled in the art from the following description and from the attached tables of drawings, given as a non-limiting example, in which:

figure 1 is a scheme of the device for optimising the movement of automated-guided vehicles, and the like, according to the present invention;
figure 2 is a schematic view of possible two-directional routes for vehicles able to be managed through the method and the device for optimising the movement of automated-guided vehicles, according to the present invention.
figure 3 is a schematic view of possible routes for vehicles able to be managed through the method and the device for optimising the movement of automated-guided vehicles, according to the present invention; and
figure 4 is a schematic view of a sequence of segments to be travelled by two automated-guided vehicles, according to the present invention.

EMBODIMENTS OF THE INVENTION.

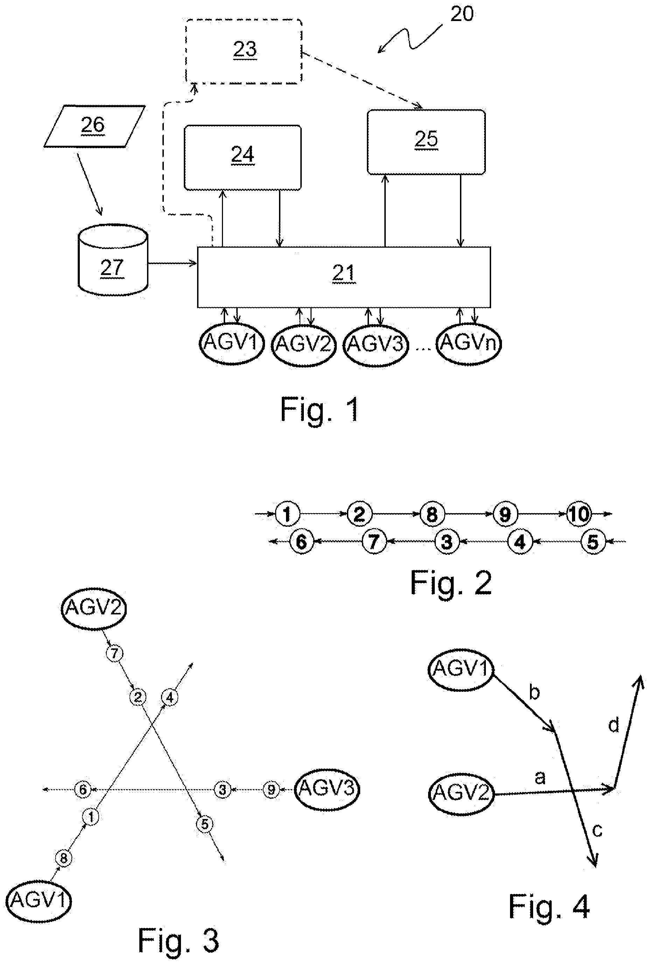

According to what has been illustrated in figure 1, the device for optimising the movement of automated-guided vehicles, wholly indicated with reference numeral 20, essentially comprises:

a traffic management module 21 that manages the movement of some automated-guided vehicles AGV1, AGV2, AGV3, ..., AGVn;
a reassignment module 24 of the missions of the automated-guided vehicles - i.e. for assigning the pick-up and delivery missions of the articles, for each vehicle, according to an optimising criterion - connected so as to communicate with the traffic management module 21 and with the automated-guided vehicles AGVn, remembering that here the term optimal or optimising has the meaning of finding the best allowed solution with respect to the constraints imposed;
a solving module 25 that is connected to and is in communication with the traffic management module 21.

In some cases, the optimisation device 20 can optionally comprise a higher-level supervisor module 23, hence indicated in figure 1 with a broken line. This supervisor module is in turn in communication with the traffic management module 21 and with the solving module 25.

Among the tasks of the supervisor module is the preliminary selection, in the medium term, of the routes, the advance allocation of routes to particular AGVs through optimising criteria, the sequencing of the loading and unloading missions so as to "pre-plan" the traffic.

The optimisation device 20 also comprises a memory 26 in which the plan of the warehouse - the so-called *layout* - or the area in which the vehicles AGV must move is represented, and from this layout of the warehouse it is then possible to obtain the connection graph that is located in the respective connection graph module 27, which comprises an outline of the possible routes for the vehicles AGV. The connection graph is then used by the traffic management module 21 to move the vehicles AGV.

In greater detail, the traffic management module 21 receives the data from the connection graph module 27 and the overall state of the system, i.e. the current position of the vehicles AGV, the missions that the vehicles must carry out, etc.

The traffic management module 21 then calculates, for each AGV, a reduced connection graph, i.e. a graph that is formed from the general graph portion that the AGV can actually reach in a predetermined number of steps, hereafter indicated as time frame *T*.

This information, i.e. the overall state of the system and the reduced connection graph for each vehicle AGV, are then passed to the solving module 25, which reprocesses it through an integer linear programming model, discussed hereafter, providing an optimised preliminary solution of the routes, in the form of a sequence of segments that each vehicle AGV must travel.

Since the preliminary solution provided by the solving module 25 used an approximate model (discussed hereafter), the traffic management module 21 must check the actual compatibility of the solution and thus check the assignments of the route segments to the vehicles in question.

In the example illustrated in figure 4, the solving module 25 provides a sequence of segments "b" and "c" for the vehicle AGV1, whereas for the vehicle AGV2, it provides the sequence of segments "a" and "d".

It should be noted that such a solution can be carried out by the solving module 25 since in the first step the vehicle AGV1 travels along the segment "b" and the vehicle AGV2 travels along the segment "a" and in the next step the vehicle AGV1 travels along the segment "c" and the vehicle AGV2 travels along the segment "d".

From the example indicated above it can be seen that the solution proposed above is compatible because, despite the crossing of route segments "a" and "c", these sections are travelled by the two vehicles AGV1 and AGV2 at different times.

In detail, the device 21 according to the present invention carries out the following activities:

it periodically checks the current position of the automated-guided vehicles in the different segments of the route, and each time a given vehicle AGVn changes its current segment, it checks the possibility of assigning the other segments to the other vehicles AGV1, AGV2, ... AGVn-1;

it assigns a route segment to a certain automated-guided vehicle in the time period "t1", only if all of the route segments relating to the previous time period "t1-1" have been assigned to all the other vehicles, this rule being necessary to prevent the solution to be applied from satisfying the priority of passage indicated in the solution of the model;

it composes a message with the segments to be assigned to each vehicle and sends it to the traffic manager 21 that sorts it for the vehicles AGV involved.

Each time the solving module 25 has processed a solution for moving the AGVs, the reassignment module 24 is recalled, which reassigns the AGVs - among those that can be reassigned - to activate the missions.

The vehicles AGV that can be reassigned are those that are not connected, by this term meaning the vehicles AGV engaged in a mission from the start moment of picking up a load of products up to the end of unloading of the load.

During this time period, the load of products relating to a mission is physically connected to the relative vehicle AGV, and therefore it is not possible to assign such a mission to be carried out to other vehicles.

It should also be noted that the reassignment module 24 assigns the missions to the vehicles AGV in a mathematically optimised manner, i.e. minimising the sum of the nominal time relative to the shortest routes (i.e. the routes that allow the destination to be reached in the shortest time possible without considering possible deviations needed to avoid "jams") that the vehicles must carry out to move from the final node of the segment assigned up to that moment to the respective mission destination nodes.

In greater detail, the reassignment module 24 reassigns the missions to the vehicles AGV, minimising the sum of the travel times of the vehicles themselves until the respective mission objective has been reached.

The objective function to be minimised is the sum of all the nominal travel times from the final point of each vehicle AGV, meaning the point in which the given segments end up to that moment.

The aforementioned sum of all the distances is calculated in advance based on the predetermined routes, for each pair of nodes, through an algorithm for calculating the minimum routes (like for example the known Dijkstra algorithm).

In practice, each node of the connection graph has an associated matrix that comprises all of the minimum nominal times towards the other nodes, calculated with the calculation algorithm of the minimum routes.

The solving module 25 generates an integer linear programming model using the data received from the traffic management module 21.

In particular, the solving module 25 comprises a memory in which the elements of the integer linear programming that define the system are recorded: variables, coefficients of the objective function, matrix of the constraints; the solving module 25 also comprises an actual linear solver.

As already stated, the solving module uses an approximate linear model, in which:

**a)** the travel time of each segment of the graph is considered to be known and fixed, i.e. each segment is always travelled with the same time. This is the most important approximation, which is certainly not satisfied by the current graphs in which very short segments and very long segments coexist. However, from simulation carried out, we have been able to find that, if the ratio between the length of the longer and shorter segments of the route is between 1.5 and 2, then the optimal sequence of travel steps is almost always the same. In reality, of course, the travel times of the segments can vary, and this is the reason for the compatibility check that is carried out at each step by the traffic management module;

**b)** in the current embodiment of the invention, the release points are ignored, i.e. the point in a certain segment that must be passed by a vehicle before the previous node can be declared free; this hypothesis derives from the consideration that the use of the information on the release points can be considered excessive if compared to the time needed for communication/decision.

Good planning ensures that the vehicles can move fluidly even though they are very close together. In practice, however, if the programming times are too short, they can be in different non-ideal situations. Of course, the release points are considered by the traffic management module 21 during the assignment of segments.

It should be noted that the solution proposed by the solver cannot be applied, or is practically unachievable, only in the case of a closed loop of segments (figure 3), in which each segment is blocked while the destination node is still occupied, but this is a situation that is almost impossible to carry out, since each vehicle is drawn towards its destination and it is difficult for the vehicles to be routed in a closed loop of segments. However, in order to avoid most of these situations, an additional incompatibility is added for each loop of 2 segments (n1, n2) and (n2, n1), leaving the possibility that higher order loops (three AGVs for three segments, four AGVs for four segments, and so on) occur, which can happen with negligible probability.

Going back to the module of the connection graph 27 and as already stated above, in such a module the calculation of the minimum distances between each pair of nodes of the connection graph is carried out. Such a calculation is carried out, for example, through the Dijkstra algorithm, then a matrix is associated to each node of the graph that comprises all the minimum distances towards the other nodes. In the module of the connection graph 27 also the incompatibilities of the routes for the vehicles AGV identified are verified, in advance, through the analysis of the graph.

For example, referring to the scheme illustrated in figure 2 of a two-directional corridor, let us consider the segments (1,2) and (4,3): such segments do not block one another. However, if such segments are assigned one after the other to two vehicles AGV, the two vehicles will be forced to stop, i.e. a so-called *deadlock* is produced.

Moreover, the pair of segments (1,2) and (5,4) can also have the same problem: after assignment to two different vehicles AGV, the vehicle on the node 4. can only travel along the segment (4,3), which is incompatible with the segment (1,2). As a result the segments (1,2) and (5,4) also have a so-called *static incompatibility,* which will be discussed hereafter.

The scheme of figure 3 represents another example of incompatibility with 3 segments.

If a first vehicle AGV1 is routed on the segment (8,1), a second vehicle AGV2 is routed on the segment (7,2) and a third vehicle AGV3 is routed on the segment (9,3), there will be a *deadlock* condition.

Indeed, the segment (1,4) for the first vehicle is blocked by the node 2, the segment (2,5) for the second vehicle is blocked by the node 3 and the segment (3,6) for the third vehicle is blocked by the node 1.

The consequence is that the set of incompatible segments, defined by the string $S_{incomp} = \{(8,1), (7,2), (9,3)\}$, can be added to a list of segments that are not wished to be assigned to different vehicles consecutively. This set of segments will be considered in the model solved by the solving module 25 through some constraints, known as "static incompatibility" constraints.

The situations of incompatible segments must be identified in advance in the structure of the graph, i.e. it is necessary to find all of the segments that must not be occupied simultaneously.

In order to carry out this analysis it is possible to proceed by automatically checking the connection graph, i.e. through a suitable algorithm the details of which will be provided hereafter.

It is also possible to carry out experimental testing sessions with the vehicles AGV finding, through simulation, the block or *deadlock* situations.

Once the groups of incompatible segments that cause the blocking of a simulation have been identified, they are stored in a list and the solving module 25 will apply suitable constraints to prevent the AGVs from being located on such groups of incompatible segments.

One particular case to be considered is that of two-directional segments. In general, it is better to avoid a vehicle AGV continuing to move back and forth on two-directional segments: this situation is comparable to the above indicated *livelocks* and, even when it does not take the system into an irresolvable condition, it causes a loss of time and, therefore, a drop in performance.

Therefore, in the step of checking for incompatibility, just the movements of the AGVs that do not go back to a segment already seen are considered.

However, there is one particular case in which it is wished for the vehicle AGV to go back into the same route segment.

This case happens when a vehicle AGV enters into the loading area that was assigned to it, and it is clear that afterwards the vehicle will have to come out again from such an area, and this is the sole case in which a vehicle AGV is permitted to go back into the same route segment.

Of course, if we do not consider this particular case, all of the possible sets of last segments to a mission node could have been classified as incompatible.

Finally, the last case to be considered consists of the definition of so-called *no-stop nodes.* For theoretical and technological reasons, and in order to limit the solving time, the integer linear programming models cannot have a very high number of variables.

For this reason, as seen, we consider a time frame of *T* time periods - or in an equivalent way *T* assignable segments, at most, to each vehicle.

It is advantageous for the last segment assigned to a vehicle not to be such that its final node hinders, in the sense of incompatibility between movements, other AGVs manoeuvring near to the respective mission nodes. In this way the AGVs leaving their missions are ensured a route towards the next destination, without needing to wait for the entering vehicles to free up the segment.

For this reason, for each mission node all of the nodes that do not have to be the final point of the last segment assigned to an AGV are determined *a priori:* such nodes are called *no-stop nodes,* since the AGVs are not permitted to make stops on such nodes. The algorithm for the identification of the *no-stop nodes* will be described hereafter.

Finally, in some situations it may be advantageous to plan, at least in an approximate manner, route sections significantly in advance: for example, to decide the order of entry of the AGVs in an area of the plant. The task of planning in advance, "at an another level", the travel along these corridors can be carried out by the high-level module 23, which, in any case, delegates to the solver 25 object of this invention the task of solving the "local" problem of selecting the approach route to the corridor, of assigning segments to all the vehicles present in order to avoid deadlock.

FORMULATION OF THE LINEAR PROGRAMMING MODEL

As known, linear optimisation models specify the relationship between the decision variables and the parameters, calculating a representative measurement to be optimised and other resulting variables.

The constraints, on the other hand, set limitations to the space of the possible decisions; the admissible values of the decision variables are determined through a series of equality or inequality constraints.

Therefore, it is necessary to select the values of the decision variables so as to satisfy the inequality constraints and at the same time maximise or minimise the result.

The integer linear programming model that is used in the solving module 25 is defined a mathematical formulation described hereafter. Concerning this, with regard to the decision variables and the constraints, the problem is described by the binary decision variables $X_n^v(t)$ in which the superscript *v*, with *v* = 1, 2, ... , *V* that indicates the number of the vehicle, and the subscript *n*, indicates the current node, and in which *t* = 1, 2, ... , *T* is the current time period, with *T* being the total number of time periods considered.

Therefore, the definition of decision variable is

$$X_n^v(t) = \begin{cases} 1 & \text{if the vehicle } v \text{ is on the node n} \\ 0 & \text{otherwise} \end{cases} \qquad \forall t$$

With this notation, the variable $X_n^v(0)$ represents the initial condition, representing the current state of the system.

As far as the objective function is concerned, it is an integer linear programming function defined as

$$\min \sum_{n=1}^{N} \sum_{v=1}^{V} \sum_{t=0}^{T} f(n,v,t,) X_n^v(t) \qquad (1.1)$$

in which the coefficients $f(v, n, t)$ depend mainly on the minimum distance between the node $n$, on which the vehicle $v$ could be located at time $t$, and the mission node of the vehicle $v$. Further details concerning the objective function will be described hereafter.

There are then the following constraints

$$\sum_n X_n^v(t) = 1 \qquad \forall v,t \qquad (1.2)$$

$$\sum_v X_n^v(t) \le 1 \qquad \forall n,t \qquad (1.3)$$

$$X_n^v(t+1) \le \sum_{n' \in V(n)} X_{n'}^v(t) \qquad \forall n,v,t < T \qquad (1.4)$$

that have the following meaning:

Constraint (1.2) indicates that each vehicle must occupy one, and only one node, at each time moment;
Constraint (1.3) imposes that no more than one vehicle can be in a node at each time moment;
Constraint (1.4) imposes the structure of the graph. Indeed, since $V(n)$ is the set of nodes able to be reached through a single route segment coming out from the node $n$, the constraint (1.4) ensures that at time $t + 1$ the AGV $v$ is on a node able to be reached by one of the nodes $n' \in v(n)$, with a single route segment.

Further constraints take into consideration the physical dimensions of the AGVs and the incompatibility between segments and nodes described earlier.

Such constraints are called *blocking rules.*

The first constraint expresses the situation "the segment $(n_1, n_2)$ blocks the segment $(n_3, n_4)$" and can be expressed in the linear form

$$X_{n_1}^{v_1}(t) + X_{n_2}^{v_1}(t+1) + X_{n_3}^{v_2}(t) + X_{n_4}^{v_2}(t+1) \le 3, \qquad (1.5)$$

written for each pair of vehicles $v_1$, $v_2$ and for each time moment $t = 0, \dots, T - 1$.

The second constraint expresses the situation "the *node k* blocks the segment $(n_1, n_2)$"

$$2X_{n_1}^{v_1}(t) + 2X_{n_2}^{v_1}(t+1) + X_k^{v_2}(t) + X_k^{v_2}(t+1) \le 4, \qquad (1.6)$$

written for each pair of vehicles $v_1$, $v_2$ and for each time moment $t = 0, \dots, T - 1$.

A further "static constraint makes all the relative positions of a set of vehicles that would lead the system to a deadlock unpermitted, i.e. in the condition in which no AGV is free to move without bumping into another. Before describing such a constraint, it is important to observe that the set of unpermitted positions is determined *a priori,* once for all, from the graph and from the segment/segment and node/segment incompatibility rules already discussed through an *ad hoc* algorithm that will be described hereafter. The constraints of this type are called static constraints since they are calculated *a priori* and do not depend on the type of mission of the AGVs or on the relative disconnected or connected state.

The principle expressed by this constraint ensures that, given a set $S_s$ of a number $s$ incompatible segments, for example the set $S_2$ of two segments that are incompatible with each other, the set $S_3$ of three segments that are incompatible with each other, and so on, any subset of s vehicles are not assigned sets of segments in $S_s$.

It should be noted that the number *s* of incompatible segments correspond to the number *s* of vehicles taken into consideration.

For example, two vehicles are not assigned two segments that correspond to an element of $S_2$, three vehicles are not assigned three segments that correspond to one of the elements in $S_3$, and so on. In particular, in the case of incompatibility between the two segments (*n1, n2*), which could be travelled by AGV1 ($v_1$), and (*n3, n4*), which could be travelled by AGV2 ($v_2$), the constraint becomes

$$X_{n_1}^{v_1}(t_1) + \sum_{t=t_1+1}^{T} X_{n_2}^{v_1}(t) + X_{n_3}^{v_2}(t_2) + \sum_{t=t_2+1}^{T} X_{n_4}^{v_2}(t) \le 2(T+1) - t_1 - t_2 - 1$$

$$(1.7)$$

written for each pair of vehicles $v_1$, $v_2$, with $v_1 \ne v_2$, and for each pair of time moments $t_1 = 0, ..., T - 1$ and $t_2 = 0, ..., T - 1$.

It should be noted that the second member is a constant that expresses the number of variables present at the first member, decreased by 1.

In the case in which *k* vehicles respectively travel along the arcs ($n_{si}, n_{di}$), *i* = 1,2, ...k , and they can block one another, whereas *k* - 1 vehicles would still have the possibility of moving along the respective routes, the constraint takes the form

$$\sum_{i=1}^{k} \left( X_{n_{s_i}}^{v_i}(t_i) + \sum_{t=t_i+1}^{T} X_{n_{d_i}}^{v_i}(t) \right) \le k(T+1) - \sum_{i=1}^{k} t_i - 1 \qquad (1.8)$$

where $n_{s_i}$ and $n_{d_i}$ represent the initial and final node of the i-th AGV *i*, *i* = 1,2, ... , *k*. The constraint (1.8) is written for each pair of s and for each pair of time moments $t_i = 0, ..., T - 1$.

A second type of constraint considered manages the *no-stop nodes*, which impose that $n_x$ cannot be assigned to a vehicle, for example the vehicle $v_2$, as the last node, if another vehicle, for example $v_1$, has already travelled along a particular segment, for example ($n_s, n_d$).

In this case, the constraint expressed in analytical form becomes

$$X_{n_s}^{v_1}(t_1) + \sum_{t=t_1+1}^{T} X_{n_d}^{v_1}(t) + X_{n_x}^{v_2}(T) \le T - t_1 + 1 \qquad (1.9)$$

written for each pair of vehicles $v_1$, $v_2$, with $v_1 \ne v_2$, and for each pair of time moments $t_1 = 0, ..., T - 1$ and $t_2 = 0, ..., T - 1$.

It should be noted that both the static constraints and the *no-stop-node* constraints introduce tests of the type "the last segment travelled by the vehicle...".

Since it is not possible to known *a priori* in which time slot the last segment will be assigned, such constraints require the generation of T constraints, one for each time period from 0 to T-1.

Finally, it should be noted that the nodes considered in the optimisation step are only those that can be reached by a certain vehicle *v* within the time period *T*, starting from the node occupied at the time period 0.

As far as the objective function to be minimised is concerned, the aforementioned coefficients *f(n, v, t)* are different for vehicles with or without a mission.

For vehicles with missions, the term *f(n, v, t)* is:

$$f(n,v,t) = B(n) + M(t) + D(n,v) \qquad (1.11)$$

where B(n) is an additional parameter different from zero if the node "*n*" is not a mission node, D(n, v) it is the nominal travel time of the minimum route between the node "n" and the mission node of the AGV "v" and

$$M(t) = \begin{cases} t & \text{if } t < T \\ t(t-1) & \text{if } t = T \end{cases} \qquad (1.12)$$

if a certain vehicle AGV does not have a mission, the reassignment module of the missions 24 redirects it towards a position, called *home position.* The node closest to the AGV among those belonging to a predefined set (stored in the module 27) and not occupied by other AGVs is selected as the home position.

As far as the AGVs without mission are concerned, the coefficients in objective function are equal to 1 for the nodes on which the vehicles are located, and equal to 2 for all of the other nodes. With this choice, such vehicles "tend" to stay still, unless they are on the route of a vehicle AGV with a mission, or are incompatible with it. In this case, the increased total cost caused by the movement of such vehicles (i.e. 2 for each node travelled) is negligible with respect to the reduction in total cost due to the approach of the vehicles with mission to the respective objectives.

The same principle can be easily applied to the case in which the AGVs without a mission are directed towards the so-called *home positions.* In this case, as soon as a vehicle AGV reaches the home position n, the cost of the virtual segment $(n, n)$, which represents the behaviour "stay on the same *node for a time period*", is set at 1, while the cost of the segment $(n, m)$, with $n \neq m$, is set at 2; with these selections, also in this case a vehicle without a mission stays in the initial position unless it constitutes an obstacle for the other vehicles with missions assigned;

as an additional rule, for each vehicle without a mission, we then consider a "repulsion force" from the mission nodes of other AGVs, so as to reduce the interference between the vehicles with and without a mission. The additional cost by which the coefficients $f(n, v, t)$ of the vehicle $v$ is multiplied for all the nodes n that are, or can be, the mission of other AGVs is given by the formula

$$\text{RepulsionMax} - \text{minD(v)} * \text{RepulsionCoeff} \qquad (1.10)$$

where RepulsionMax and RepulsionCoeff are design parameters, and minD(v) is the minimum distance between the node in which the vehicle $v$ without destination is located and the mission nodes of all the others.

The following exceptions also affect the definition of the cost function:

if $n$ is a mission node, and if the vehicle $v$ does not have a mission in the node $n$, then it is $f(n, v, t) = MAX\_INT$, with *MAX_INT* being the largest whole number able to be represented by a calculator. This selection prevents a vehicle from being directed towards a mission node different from its own;

if from the last change in mission an AGV has been on the same node for TSDeadlock time periods (potential deadlock), or it has passed by the same node more than TS_Count times (potential livelock) then the cost becomes

$$\text{F(n,v,t)} = \text{B(n)} + \text{M(t)} * \text{MalusForDeadlock} \qquad (1.13)$$

where MalusForDeadlock is a design parameter.

## ADDITIONAL ALGORITHMS: STATIC CONSTRAINTS

In order to identify the sets of incompatible segments that define the static constraints it is possible to proceed in two ways:

by evaluating the *blocking rules* that prevent collisions between vehicles and manually determining which are groups of incompatible segments; this process allows almost all the pairs of incompatible segments to be identified;

by carrying out a simulation and storing as incompatible all the groups of segments on which deadlock situations occur; this method makes it possible to identify the groups of more than two segments that are incompatible and possibly the pairs that were missed during the manual evaluation, according to the previous point.

## ADDITIONAL ALGORITHMS: *NO-STOP NODES*

In this paragraph we will describe the algorithm used to identify the so-called *NO-STOP NODES.* Regarding this, it is important to observe that each segment $s$ is characterised by a different set of *NO-STOP NODES,* hereafter indicated with $NSN_s$.

The algorithm foresees that:

1. $S$ is the set of all the segments that connect all of the nodes of the possible routes;
2. for each segment $s$ in $S$, all the nodes that are incompatible with all those after s are *NO-STOP NODES;*
3. if $S$ is not empty

a. Having extracted a segment *s* in *S*, and removed from *S*, add to *NSN$_s$* all of the nodes that are *NO-STOP NODES* for all those after *s*, excluding the inverse segment (*j, i*) of *s* = (*i, j*), if it is not the only one;

b. If the set *NSN$_s$* has changed, then add to *S*, if not already present, all of the segments that precede *s*;

4. add to *NSN$_s$* all the nodes that are incompatible with those after *s* ;

5. for each segment *s* = (*i, j*) remove the *NO-STOP NODES n* if

a. *n* coincides with *i*, or with *j*, or it is a mission node;

b. The minimum route between *i* and *n* added to the threshold parameter NSN_Threshold is lower than the minimum distance between *n* and *j* ;

c. the minimum distance between *j* and *n* is more than a certain distance

NSN_RangeMeters.

In this algorithm, since points 2, 3 and 4 can generate many *NO-STOP NODES* for each segment *s*, limitation mechanisms of the set *NSN$_s$* are used, according to what is indicated in the previous point 5:

the first limitation mechanism 5a removes the origin and destination nodes of *s* and the mission nodes;

the second limitation mechanism 5b implements a heuristic rule aimed at eliminating from the set *NSN$_s$* some nodes that, whilst satisfying point 4 of the algorithm, i.e. they are "incompatible" with the successors *s*, they are not true *NO-STOP NODES* because there are no arcs that can be backward routed up to *s*, a condition expressed by the inequality between the distances;

the third limitation mechanism 5c limits the set *NSN$_s$* to nodes within a certain distance (NSN_RangeMeters) from *s*. The invention, thus conceived, allows important technical advantages to be obtained.

An important technical advantage is that the method for optimising the movement of automated-guided vehicles, and the like, allows the routes that the vehicles must follow between stations to carry out the assigned missions to be optimised, reducing the time necessary for the transportation of articles, and ensuring that jams cannot be created along the routes, even in the case of a high number of automated-guided vehicles. The method for optimising the movement of automated-guided vehicles, and the like, also allows a saving, not just of time, but also of money. It has thus been seen how the invention achieves the proposed purposes.

The present invention has been described according to preferred embodiments, but equivalent variants can be devised without departing from the scope of protection offered by the following claims.

**Claims**

1. Device (20) for optimising the movement of automated-guided vehicles, comprising a traffic management module (21) to manage the movement of some automated-guided vehicles (AGV1, AGV2, AGV3 ..., AGVn) over routes of a graph defined by segments and nodes for connecting the segments, said automated-guided vehicles being indicated by a number v, wherein v indicates the current vehicle, with *v* = 1, 2, ..., *V*, said nodes being indicated by a number n, wherein n indicates the current node, with *n* = 1, 2, ..., *N*, according to time periods *t*, and wherein *t* = 1, 2, ..., *T* is the current time period, wherein the device (20) comprises a solving module (25) connected to and in communication with the traffic management module (21), the device being **characterised by** said solving module (25) executing an optimising solution using the following integer linear programming function:

$$\min \sum_{n=1}^{N} \sum_{v=1}^{V} \sum_{t=0}^{T} f\left(n, v, t,\right) X_n^v\left(t\right) \qquad (1.1)$$

said function representing the objective function, and the coefficients *f(n,v,t)* indicate the minimum distance between the node *n* on which the vehicle *v* could be located at time *t*, with respect to the mission node of the vehicle *v*, and wherein $X_n^v\left(t\right)$ is a binary decision variable defined as

$$X_n^v(t) = \begin{cases} 1 & \text{if the vehicle } v \text{ is on the node n} \\ 0 & \text{otherwise} \end{cases} \qquad \forall t$$

with the following constraints

$$\sum_n X_n^v(t) = 1 \qquad \forall v, t \qquad\qquad (1.2)$$

$$\sum_v X_n^v(t) \le 1 \qquad \forall n, t \qquad\qquad (1.3)$$

$$X_n^v(t+1) \le \sum_{n' \in V(n)} X_{n'}^v(t) \qquad \forall n, v, t < T \qquad\qquad (1.4)$$

that have the following meaning:

constraint (1.2) indicates that each vehicle must occupy one, and only one node, at each time moment;
constraint (1.3) imposes that no more than one vehicle can be in a node at each time moment;
constraint (1.4) imposes the structure of the graph,

V(n) being the set of nodes able to be reached through a single route segment coming out from the node $n$.

2. Device (20) for optimising the movement of automated-guided vehicles according to claim 1, comprising a constraint that expresses the situation in which the segment $(n_1, n_2)$ blocks the segment $(n_3, n_4)$ and it is expressed in the linear form

$$X_{n_1}^{v_1}(t) + X_{n_2}^{v_1}(t+1) + X_{n_3}^{v_2}(t) + X_{n_4}^{v_2}(t+1) \le 3, \qquad\qquad (1.5)$$

written for each pair of vehicles $v_1$, $v_2$ and for each time moment $t = 0, ..., T - 1$.

3. Device (20) for optimising the movement of automated-guided vehicles according to claim 1 or 2, comprising a constraint that expresses the situation in which the node $k$ blocks the segment $(n_1, n_2)$ and is expressed in the linear form

$$2 X_{n_1}^{v_1}(t) + 2 X_{n_2}^{v_1}(t+1) + X_k^{v_2}(t) + X_k^{v_2}(t+1) \le 4, \qquad\qquad (1.6)$$

written for each pair of vehicles $v_1$, $v_2$ and for each time moment $t = 0, ..., T - 1$.

4. Device (20) for optimising the movement of automated-guided vehicles according to any one of the previous claims, comprising a constraint that ensures that, taking two incompatible segments, the whole of the last segments assigned to each of the vehicles is not equal to one of the elements of $S$, and it is expressed in the linear form

$$X_{n_1}^{v_1}(t_1) + \sum_{t=t_1+1}^{T} X_{n_2}^{v_1}(t) + X_{n_3}^{v_2}(t_2) + \sum_{t=t_2+1}^{T} X_{n_4}^{v_2}(t) \le 2(T+1) - t_1 - t_2 - 1$$

$$(1.7)$$

written for each pair of vehicles $v_1$, $v_2$, with $v_1 \ne v_2$, and for each pair of time moments $t_1 = 0, ..., T - 1$ and $t_2 = 0, ..., T - 1$.

5. Device (20) for optimising the movement of automated-guided vehicles according to any one of the previous claims, comprising a constraint that expresses the situation in which $s$ vehicles can block one another, whereas $s$ - 1 vehicles would still have the possibility of moving along the respective routes, and it is expressed in the linear form

$$\sum_{i=1}^{k}\left( X_{n_{s_i}}^{v_i}\left(t_i\right) + \sum_{t=t_i+1}^{T} X_{n_{d_i}}^{v_i}\left(t\right) \right) \leq k\left(T+1\right) - \sum_{i=1}^{k} t_i - 1 \qquad (1.8)$$

where $n_{s_i}$ and $n_{d_i}$ represent the initial and final node of the $i$-th AGV $i$, $i$ = 1,2, ..., $k$. The constraint (1.8) is written for each pair set of s and for each pair of time moments $t_i$ = 0, ..., $T$ - 1.

6. Device (20) for optimising the movement of automated-guided vehicles according to any one of the previous claims, comprising a constraint that imposes that $n_x$ cannot be assigned as last node to a vehicle, for example the vehicle $v_2$, if another vehicle, for example $v_1$, has already travelled along a particular segment, for example ($n_s$, $n_d$), and it is expressed in the linear form

$$X_{n_s}^{v_1}\left(t_1\right) + \sum_{t=t_1+1}^{T} X_{n_d}^{v_1}\left(t\right) + X_{n_x}^{v_2}\left(T\right) \leq T - t_1 + 1 \qquad (1.9)$$

written for each pair of vehicles $v_1$, $v_2$, with $v_1 \neq v_2$, and for each pair of time moments $t_1$ = 0, ..., $T$ - 1 and $t_2$ = 0, ..., $T$ - 1.

7. Device (20) for optimising the movement of automated-guided vehicles according to any one of the previous claims, wherein the function f(n,v,t) is determined in the following way:

```
f(n,v,t)  =  B(n)  +  M(t)  +  D(n,v)              (1.11)
```

where B(n) is an additional parameter different from zero if the node "$n$" is not a mission node, D(n, v) is the nominal time taken to travel the minimum route between the node "n" and the mission node of the AGV "v" and

$$M(t) = \begin{cases} t & \text{if } t < T \\ t(t-1) & \text{if } t = T \end{cases} \qquad (1.12)$$

if $n$ is a mission node, and if the vehicle $v$ does not have a mission in the node $n$, then it is $f(n, v, t) = MAX\_INT$, with $MAX\_INT$ being the largest whole number that can be represented by a computer, thus preventing a vehicle from being able to head towards a mission node different from its own;
if a certain vehicle (AGVn) does not have a mission, the traffic management module (21) redirects it towards an initial position, called *home position n*, set in advance, or it leaves it on the last node reached; as soon as the vehicle (AGVn) reaches the *home position n*, either it stays on the last node reached, the cost of the virtual segment ($n, n$), which represents the behaviour of staying on the same node for a time period, is set at 1, whereas the cost of the segment ($n, m$), with $n \neq m$, is set at 2; in this way a certain vehicle (AGVn) stays in the initial position if it does not constitute an obstacle to the other vehicles with assigned missions.

8. Device (20) for optimising the movement of automated-guided vehicles according to any one of the previous claims, comprising a rule so that for each vehicle (AGVn) without a mission, a repulsion force is considered from the mission nodes of other vehicles (AGV1, AGV2, AGV3 ..., AGVn-1, ..., AGVn+1, ...), so as to reduce the interference between the vehicles with a mission and vehicles without a mission; the additional cost by which the coefficient *f(n, v, t)* of a node without a mission is multiplied is given by the formula

```
RepulsionM ax − minD ·RepulsionC oeff              (1.10)
```

where RepulsionMax and RepulsionCoeff are design parameters, and minD is the minimum distance between the node in which the vehicle without destination is located and the mission nodes of all of the others.

9. Device (20) for optimising the movement of automated-guided vehicles according to any one of the previous claims, comprising a rule so that for each vehicle (AGVn) with a mission, the additional cost by which the coefficient $f(n, v, t)$ is multiplied is:

$$f(n,v,t) = \text{BonusForMission} + \\ + \text{TimeMod(t)} \cdot \text{distance}(n, \text{Mission}(v)) \qquad (1.11)$$

where BonusForMission is an additional parameter different from zero if the node $n$ is not a mission node and

$$\text{TimeMod(t)} = \begin{cases} t & \text{if } t < T \\ t(t-1) & \text{if } t = T \end{cases} \qquad (1.12)$$

10. Device (20) for optimising the movement of automated-guided vehicles according to any one of the previous claims, comprising the rule:

if from the last change of mission an AGV has been on the same node for TSDeadlock time periods (potential deadlock), or it has passed by the same node more than IS_Count times (potential livelock) then the cost becomes

$$f(n,v,t) = \text{BonusForMission} + \\ + \text{TimeMod(t)} \cdot \text{MalusForDeadlock} \qquad (1.13)$$

where MalusForDeadlock is a design parameter.

11. Device (20) for optimising the movement of automated-guided vehicles according to any one of the previous claims, comprising a rule through which for each mission node all of the nodes that must not be the final point of the last segment assigned to a certain AGV are determined, such nodes being defined as *no-stop nodes,* the aforementioned rule comprises:

each segment s is **characterised by** a different set of *NO-STOP NODES,* indicated with $NSN_s$;
$S$ is the set of all of the segments that connect all of the nodes of the possible routes;
for each segment $s$ in $S$, all of the nodes that are incompatible with all of the successors of $s$ are *NO-STOP NODES*;
if $S$ is not empty

having extracted a segment $s$ in $S$, and removed from $S$, add to $NSN_s$ all of the nodes that are *NO-STOP NODES* for all the successors of $s$, excluding the inverse segment $(j, i)$ of $s = (i, j)$, if it is not the only one;
if the set $NSN_s$ has changed, then add to $S$, if not already present, all of the segments that precede $s$;

add to $NUN_s$ all of the nodes incompatible with the successors of $s$;
for each segment $s = (i, j)$ remove the n-th *NO-STOP NODES* ($n$) if

$n$ coincides with $i$, or with $j$, or it is a mission node;
the minimum path between $i$ and $n$ added to the threshold parameter (NSN_Threshold) is lower than the minimum distance between $n$ and $j$;
the minimum distance between $j$ and $n$ is greater than a certain distance (NSN_RangeMeters).

12. Device (20) for optimising the movement of automated-guided vehicles according to any one of the previous claims, comprising a reassignment module (24) of the missions of the automated-guided vehicles, such a reassignment module (24) being connected so as to communicate with the traffic management module (21) and with the automated-guided vehicles (AGV1, AGV2, AGV3, ..., AGVn).

**13.** Device (20) for optimising the movement of automated-guided vehicles according to any one of the previous claims, comprising connection graph module (27), which comprises a plan of the possible routes for the vehicles (AGV1, AGV2, AGV3 ..., AGVn).

**14.** Device (20) for optimising the movement of automated-guided vehicles according to any one of the previous claims, wherein said solving module (25) provides an approximate solution of the assignments of the routes to said vehicles (AGV1, AGV2, AGV3, ..., AGVn), and wherein said traffic management module (21) must verify the actual compatibility of the solution and then check the assignments of the route segments to said vehicles (AGV1, AGV2, AGV3 ..., AGVn).

**15.** Method for optimising the movement of automated-guided vehicles (AGV1, AGV2, ..., AGVn), comprising the steps of:

managing the movement of some automated-guided vehicles (AGV1, AGV2, AGV3 ..., AGVn) on routes of a graph defined by segments and nodes connecting the segments, said automated-guided vehicles being indicated by a number v, wherein v indicates the current vehicle, with $v = 1, 2, ..., V$, said nodes being indicated by a number n, wherein n indicates the current node, with $n = 1, 2, ..., N$, according to time periods $t$, and wherein $t = 1, 2, ..., T$ is the current time period, **characterised in that** it comprises an optimising solution step of said movement of some automated-guided vehicles obtained using the following integer linear programming function:

$$\min \sum_{n=1}^{N} \sum_{v=1}^{V} \sum_{t=0}^{T} f\left(n, v, t,\right) X_{n}^{v}(t) \qquad (1.1)$$

said function representing the objective function, and the coefficients $f(n,v,t)$ indicate the minimum distance between the node n on which the vehicle $v$ could be located at time $t$, with respect to the mission node of the vehicle $v$, and wherein $X_{n}^{v}(t)$ is a binary decision variable defined as

$$X_{n}^{v}(t) = \begin{cases} 1 & \text{if the vehicle v is on the node n} \\ 0 & \text{otherwise} \end{cases} \qquad \forall t$$

with the following constraints

$$\sum_{n} X_{n}^{v}(t) = 1 \qquad \forall v, t \qquad (1.2)$$

$$\sum_{v} X_{n}^{v}(t) \leq 1 \qquad \forall n, t \qquad (1.3)$$

$$X_{n}^{v}(t+1) \leq \sum_{n' \in V(n)} X_{n'}^{v}(t) \qquad \forall n, v, t < T \qquad (1.4)$$

which have the following meaning:

constraint (1.2) indicates that each vehicle must occupy one, and only one node, at each time moment;
constraint (1.3) imposes that no more than one vehicle can be in a node at each time moment;
constraint (1.4) imposes the structure of the graph,

$V(n)$ being the set of nodes able to be reached through a single route segment coming out from the node $n$.

**Patentansprüche**

1. Vorrichtung (20) zur Optimierung der Bewegung fahrerloser Transportfahrzeuge, umfassend ein Verkehrssteuerungsmodul (21) zur Steuerung der Bewegung einiger fahrerloser Transportfahrzeuge (AGV1, AGV2, AGV3 ..., AGVn) auf Strecken eines Graphen, der durch Segmente und Knoten zum Verbinden der Segmente definiert ist, die besagten fahrerlosen Transportfahrzeuge durch eine Nummer $v$ angegeben werden, worin $v$ das aktuelle Fahrzeug mit $v = 1,2, ..., V$ angibt, die besagten Knoten durch eine Nummer n angegeben werden, worin n den aktuellen Knoten mit $n = 1,2, ..., N$ angibt, nach Zeitabschnitten $t$, und worin $t = 1, 2, T$ der aktuelle Zeitabschnitt ist, worin die Vorrichtung (20) ein Lösungsmodul (25) umfasst, das mit dem Verkehrssteuerungsmodul (21) verbunden ist und in Verbindung steht, die Vorrichtung **dadurch gekennzeichnet ist, dass** das besagte Lösungsmodul (25) eine optimierende Lösung ausführt, wobei die folgende ganzzahlige lineare Programmierfunktion verwendet wird:

$$\min \sum_{n=1}^{N} \sum_{v=1}^{V} \sum_{t=0}^{T} f(n,v,t,)X_n^v(t) \qquad (1.1)$$

die besagte Funktion, die die Zielfunktion darstellt, und die Koeffizienten $f(n,v,t)$ den Mindestabstand zwischen dem Knoten $n$ angeben, auf dem das Fahrzeug $v$ zum Zeitpunkt t angeordnet werden kann, in Bezug auf den Auftragsknoten des Fahrzeugs $v$, und worin $X^v n(t)$ eine binäre Entscheidungsvariable ist, definiert mit

$$X_n^v(t) = \begin{cases} 1 & \text{if the vehicle v is on the node n} \\ 0 & \text{otherwise} \end{cases} \qquad \forall t$$

mit den folgenden Nebenbedingungen

$$\sum_n X_n^v(t) = 1 \qquad \forall v,t \qquad (1.2)$$

$$\sum_v X_n^v(t) \leq 1 \qquad \forall n,t \qquad (1.3)$$

$$X_n^v(t+1) \leq \sum_{n' \in V(n)} X_{n'}^v(t) \qquad \forall n,v,t < T \qquad (1.4)$$

die die folgende Bedeutung haben:

Nebenbedingung(1.2) gibt an, dass jedes Fahrzeug genau einen Knoten zu jedem Zeitpunkt belegen muss;
Nebenbedingung (1.3) legt fest, dass nicht mehr als ein Fahrzeug zu jedem Zeitpunkt in einem Knoten vorhanden sein kann;
Nebenbedingung (1.4) legt die Graph-Struktur fest,

wobei $V(n)$ der Satz von Knoten ist, der durch ein einzelnes Streckensegment erreicht werden kann, das aus dem Knoten n herausführt.

2. Vorrichtung (20) zur Optimierung der Bewegung fahrerloser Transportfahrzeuge nach Anspruch 1, umfassend eine Nebenbedingung, die die Situation ausdrückt, in der das Segment $(n_1 \, n_2)$ das Segment $(n_3, n_4)$ blockiert und die ausgedrückt ist in der Linearform

$$X_{n_1}^{v_1}(t) + X_{n_2}^{v_1}(t+1) + X_{n_3}^{v_2}(t) + X_{n_4}^{v_2}(t+1) \leq 3, \qquad (1.5)$$

, geschrieben für jedes Fahrzeugpaar $v_1$, $v_2$ und für jeden Zeitpunkt $t = 0, ..., T - 1$.

3. Vorrichtung (20) zur Optimierung der Bewegung fahrerloser Transportfahrzeuge nach Anspruch 1 oder 2, umfassend eine Nebenbedingung, die die Situation ausdrückt, in der der Knoten k das Segment ($n_1$, $n_2$) blockiert und die ausgedrückt ist in der Linearform

$$2\,X^{v_1}_{n_1}(t) + 2\,X^{n_1}_{n_2}(t+1) + X^{v_2}_{k}(t) + X^{v_2}_{k}(t+1) \le 4, \qquad (1.6)$$

, geschrieben für jedes Fahrzeugpaar $v_1$, $v_2$ und für jeden Zeitpunkt $t = 0, ..., T - 1$.

4. Vorrichtung (20) zur Optimierung der Bewegung fahrerloser Transportfahrzeuge nach irgendeinem der vorangegangenen Ansprüche, umfassend eine Nebenbedingung, die gewährleistet, dass durch Übernahme von zwei inkompatiblen Segmenten die Gesamtheit der letzten Segmente, die jedem der Fahrzeuge zugewiesen sind, nicht gleich einem der Elemente von $S$ ist und die ausgedrückt ist in der Linearform

$$X^{v_1}_{n_1}(t_1) + \sum_{t=t_1+1}^{T} X^{v_1}_{n_2}(t) + X^{v_2}_{n_3}(t_2) + \sum_{t=t_2+1}^{T} X^{v_2}_{n_4}(t) \le 2(T+1) - t_1 - t_2 - 1 \qquad (1.7)$$

, geschrieben für jedes Fahrzeugpaar $v_1$, $v_2$, mit $v_1 \ne v_2$, und für jedes Zeitpunktepaar $t_1 = 0, ..., T - 1$ und $t_2 = 0, ..., T - 1$.

5. Vorrichtung (20) zur Optimierung der Bewegung fahrerloser Transportfahrzeuge nach irgendeinem der vorangegangenen Ansprüche, umfassend eine Nebenbedingung, die die Situation ausdrückt, in der s Fahrzeuge einander blockieren können, wohingegen s - 1 Fahrzeuge immer noch die Möglichkeit eines Bewegens entlang der entsprechenden Strecken hätten, und die ausgedrückt ist in der Linearform

$$\sum_{i=1}^{k} \left( X^{v_i}_{n_{s_i}}(t_i) + \sum_{t=t_i+1}^{T} X^{v_i}_{n_{d_i}}(t) \right) \le k(T+1) - \sum_{i=1}^{k} t_i - 1 \qquad (1.8)$$

, in der $n_{si}$ und $n_{di}$ den Anfangs- und Endknoten des i-ten AGV idarstellen, $i = 1, 2, ..., k$. Die Nebenbedingung (1.8) ist für jedes festgesetzte Paar von s und für jedes Zeitpunktepaar $t_i = 0, ..., T - 1$ geschrieben.

6. Vorrichtung (20) zur Optimierung der Bewegung fahrerloser Transportfahrzeuge nach irgendeinem der vorangegangenen Ansprüche, umfassend eine Nebenbedingung, die festlegt, dass $n_x$ nicht als letzter Knoten einem Fahrzeug zugewiesen werden kann, beispielsweise dem Fahrzeug $v_2$, wenn ein anderes Fahrzeug, beispielsweise $v_1$, bereits ein besonderes Segment, beispielsweise ($n_s$, $n_d$), befahren hat, und die ausgedrückt ist in der Linearform

$$X^{v_1}_{n_s}(t_1) + \sum_{t=t_1+1}^{T} X^{v_1}_{n_d}(t) + X^{v_2}_{n_x}(T) \le T - t_1 + 1 \qquad (1.9)$$

geschrieben für jedes Fahrzeugpaar $v_1$, $v_2$, mit $v_1 \ne v_2$, und für jedes Zeitpunktepaar $t_1 = 0, ..., T - 1$ und $t_2 = 0, ..., T - 1$.

7. Vorrichtung (20) zur Optimierung der Bewegung fahrerloser Transportfahrzeuge nach irgendeinem der vorangegangenen Ansprüche, worin die Funktion $f(n,v,t)$ folgendermaßen bestimmt ist:

$$f(n,v,t) = B(n) + M(t) + D(n,v) \qquad (1.11)$$

in der $B(n)$ ein zusätzlicher Parameter verschieden von Null ist, wenn der Knoten "n" kein Auftragsknoten ist, D $(n, v)$ die Nennzeit ist für das Befahren der Mindeststrecke zwischen dem Knoten "$n$" und dem Auftragsknoten des AGV "$v$" und

$$M(t) = \begin{cases} t & \text{if } t < T \\ t(t-1) & \text{if } t = T \end{cases} \qquad (1.12)$$

wenn n ein Auftragsknoten ist, und wenn das Fahrzeug *v* keinen Auftrag im Knoten n hat, dann lautet sie *f(n, v, t)* = *MAX_INT,* wobei *MAX_INT* die größte ganze Zahl ist, die von einem Computer dargestellt werden kann, sodass verhindert wird, dass ein Fahrzeug zu einem Auftragsknoten gelangen kann, der sich von seinem eigenen unterscheidet;

wenn ein bestimmtes Fahrzeug (AGVn) keinen Auftrag hat, lenkt das Verkehrssteuerungsmodul (21) es in eine Ausgangsposition um, die *Grundposition n* genannt wird, im Voraus festgesetzt, oder es lässt es an dem letzten erreichten Knoten; sobald das Fahrzeug (AGVn) die Grundposition n erreicht oder es an dem letzten erreichten Knoten bleibt, werden die Kosten des virtuellen Segments (n, n), die das Verhalten des Verweilens an dem gleichen Knoten für einen Zeitabschnitt darstellen, auf 1 gesetzt, wogegen die Kosten des Segments (*n, m*), mit $n \neq m$, auf 2 gesetzt werden; auf diese Weise bleibt ein bestimmtes Fahrzeug (AGVn) in der Ausgangsposition, wenn es kein Hindernis für die anderen Fahrzeuge mit zugewiesenen Aufträgen darstellt.

8.  Vorrichtung (20) zur Optimierung der Bewegung fahrerloser Transportfahrzeuge nach irgendeinem der vorangegangenen Ansprüche, umfassend eine Regel, sodass für jedes Fahrzeug (AGVn) ohne einen Auftrag eine Rückstoßkraft von den Auftragsknoten anderer Fahrzeuge (AGV1, AGV2, AGV3 AGVn-1,...,AGVn+1, ...) berücksichtigt wird, um die Interferenz zwischen den Fahrzeugen mit einem Auftrag und Fahrzeugen ohne einen Auftrag zu reduzieren; die zusätzlichen Kosten, mit denen der Koeffizient *f(n,v,t)* eines Knotens ohne einen Auftrag multipliziert wird, ergibt sich aus der Formel

$$RepulsionM\,ax - minD \cdot RepulsionC\,oeff \qquad (1.10)$$

in der RepulsionMax und RepulsionCoeff Design-Parameter sind und minD der Mindestabstand zwischen dem Knoten, in dem das Fahrzeug ohne Ziel angeordnet ist, und den Auftragsknoten aller anderen ist.

9.  Vorrichtung (20) zur Optimierung der Bewegung fahrerloser Transportfahrzeuge nach irgendeinem der vorangegangenen Ansprüche, umfassend eine Regel, sodass für jedes Fahrzeug (AGVn) mit einem Auftrag die zusätzlichen Kosten, mit denen der Koeffizient *f(n,v,t)* multipliziert werden, die folgenden sind:

$$f(n,v,t) = BonusForMission + \\ + TimeMod(t) \cdot distance(n, Mission(v)) \qquad (1.11)$$

in der BonusForMission ein zusätzlicher Parameter verschieden von Null ist, wenn der Knoten *n* kein Auftragsknoten ist und

$$TimeMod(t) = \begin{cases} t & \text{if } t < T \\ t(t-1) & \text{if } t = T \end{cases} \qquad (1.12)$$

10. Vorrichtung (20) zur Optimierung der Bewegung fahrerloser Transportfahrzeuge nach irgendeinem der vorangegangenen Ansprüche, umfassend die Regel:

wenn ein AGV ab der letzten Änderung eines Auftrags an dem gleichen Knoten für TSDeadlock Zeitabschnitte (möglicher Deadlock) gewesen ist, oder es den gleichen Knoten mehr als TS_Count times (möglicher Livelock) durchlaufen hat, dann werden die Kosten zu

$$f(n,v,t) = \text{BonusForMission} + \\ + \text{TimeMod(t)} \cdot \text{MalusForDeadlock} \qquad (1.13)$$

in denen MalusForDeadlock ein Design-Parameter ist.

11. Vorrichtung (20) zur Optimierung der Bewegung fahrerloser Transportfahrzeuge nach irgendeinem der vorangegangenen Ansprüche, umfassend eine Regel, durch die alle Knoten, die nicht der letzte Punkt des letzten Segments sein dürfen, das einem bestimmten AGV zugewiesen ist, für jeden Auftragsknoten bestimmt werden, wobei diese Knoten als *no-stop-nodes* definiert sind, die vorgenannte Regel umfasst:

jedes Segment *s* ist **gekennzeichnet durch** einen unterschiedlichen Satz von 5 *NO-STOP NODES,* angegeben durch $NSN_s$;
*S* ist der Satz aller Segmente, die alle Knoten der möglichen Strecken verbinden;
für jedes Segment *s* in *S* sind alle Knoten, die inkompatibel mit allen Nachfolgern von *s* sind, *NO-STOP NODES;*
wenn *S* nicht leer ist

nachdem man ein Segment *s* in *S* extrahiert hat und aus *S* entfernt hat, sind zu $NSN_s$ alle Knoten, die *NO-STOP NODES* sind, für alle Nachfolger von *s zu* addieren, ausgenommen des Inverssegments (*j, i*) von *s* = (*i, j*), wenn es nicht das einzige ist;
wenn sich der gesetzte $NSN_s$ geändert hat, sind zu *S*, sofern nicht schon vorhanden, alle Segmente zu addieren, denen ein *s* vorangestellt ist;

zu $NSN_S$ alle Knoten addieren, die inkompatibel mit den Nachfolgern von *s* sind;
für jedes Segment *s* = (*i, j*) den n-ten *NO-STOP NODES* (*n*) entfernen, wenn

*n* mit *i* oder mit *j* übereinstimmt oder es ein Auftragsknoten ist;
der Mindestweg zwischen *i* und *n* addiert mit dem Schwellenparameter (NSN_Threshold) niedriger als der Mindestabstand zwischen *n* und *j ist;*
der Mindestabstand zwischen *j* und *n* größer als ein bestimmter Abstand (NSN_RangeMeters) ist.

12. Vorrichtung (20) zur Optimierung der Bewegung fahrerloser Transportfahrzeuge nach irgendeinem der vorangegangenen Ansprüche, umfassend ein Neuzuweisungsmodul (24) der Aufträge der fahrerlosen Transportfahrzeuge, wobei ein solches Neuzuweisungsmodul (24) verbunden ist, um mit dem Verkehrssteuerungsmodul (21) und mit den fahrerlosen Transportfahrzeugen (AGV1, AGV2, AGV3,..., AGVn) zu kommunizieren.

13. Vorrichtung (20) zur Optimierung der Bewegung fahrerloser Transportfahrzeuge nach irgendeinem der vorangegangenen Ansprüche, umfassend ein Verbindungsgraph-Modul (27), das einen Plan der möglichen Strecken für die Fahrzeuge (AGV1, AGV2, AGV3 ..., AGVn) umfasst.

14. Vorrichtung (20) zur Optimierung der Bewegung fahrerloser Transportfahrzeuge nach irgendeinem der vorangegangenen Ansprüche, worin das besagte Lösungsmodul (25) eine Näherungslösung der Zuweisung der Strecken an die besagten Fahrzeuge (AGV1, AGV2, AGV3, ..., AGVn) vorsieht und worin das besagte Verkehrssteuerungsmodul (21) die aktuelle Kompatibilität der Lösung überprüfen und dann die Zuweisungen der Streckensegmente an die besagten Fahrzeuge (AGV1, AGV2, AGV3 ..., AGVn) prüfen muss.

15. Verfahren zur Optimierung der Bewegung fahrerloser Transportfahrzeuge (AGV1, AGV2, ..., AGVn), umfassend die Schritte der:

Steuerung der Bewegung einiger fahrerloser Transportfahrzeuge (AGV1, AGV2, AGV3 ..., AGVn) auf Strecken eines Graphen, der durch Segmente und Knoten zum Verbinden der Segmente definiert ist, die besagten fahrerlosen Transportfahrzeuge durch eine Nummer *v* angegeben werden, worin *v* das aktuelle Fahrzeug mit *v* = 1, 2,... ,*V* angibt, die besagten Knoten durch eine Nummer n angegeben werden, worin n den aktuellen Knoten mit *n* = 1,2,..., *N* angibt, nach Zeitabschnitten *t,* und worin *t* = 1, 2, *T* der aktuelle Zeitabschnitt ist, **dadurch gekennzeichnet, dass** es einen optimierenden Lösungsschritt der besagten Bewegung einiger fahrerloser Transportfahrzeuge umfasst, die unter Verwendung der folgenden ganzzahligen linearen Programmierfunktion erhalten wird:

die besagte Funktion, die die Zielfunktion darstellt, und die Koeffizienten $f(n,v,t)$ den Mindestabstand zwischen

$$\min \sum_{n=1}^{N} \sum_{v=1}^{V} \sum_{t=0}^{T} f(n,v,t)X_n^v(t) \qquad (1.1)$$

dem Knoten $n$ angeben, auf dem das Fahrzeug $v$ zum Zeitpunkt $t$ angeordnet werden kann, in Bezug auf den Auftragsknoten des Fahrzeugs $v$, und worin $X^v n(t)$ eine binäre Entscheidungsvariable ist, definiert mit

$$X_n^v(t) = \begin{cases} 1 & \text{if the vehicle v is on the node n} \\ 0 & \text{otherwise} \end{cases} \qquad \forall t$$

mit den folgenden Nebenbedingungen

$$\sum_n X_n^v(t) = 1 \qquad \forall v,t \qquad (1.2)$$

$$\sum_v X_n^v(t) \le 1 \qquad \forall n,t \qquad (1.3)$$

$$X_n^v(t+1) \le \sum_{n' \in V(n)} X_{n'}^v(t) \qquad \forall n,v,t < T \qquad (1.4)$$

welche die folgende Bedeutung haben:

Nebenbedingung(1.2) gibt an, dass jedes Fahrzeug einen und nur einen Knoten zu jedem Zeitpunkt belegen muss;
Nebenbedingung (1.3) legt fest, dass nicht mehr als ein Fahrzeug zu jedem Zeitpunkt in einem Knoten vorhanden sein kann;
Nebenbedingung (1.4) legt die Graph-Struktur fest,

wobei $V(n)$ der Satz von Knoten ist, der durch ein einzelnes Streckensegment erreicht werden kann, das aus dem Knoten $n$ herausführt.

## Revendications

1. Dispositif (20) pour optimiser le mouvement de véhicules à guidage automatisé, comprenant un module de gestion de la circulation (21) pour gérer le mouvement de certains véhicules à guidage automatisé (AGV1, AGV2, AGV3 ..., AGVn) sur les itinéraires d'un graphique défini par des segments et des noeuds pour raccorder les segments, lesdits véhicules à guidage automatisé étant indiqués par un nombre $v$, dans lequel $v$ indique le véhicule courant, avec $v$ = 1, 2, ..., $V$, lesdits noeuds étant indiqués par un nombre $n$, dans lequel n indique le noeud actuel, avec $n$ = 1, 2, ..., $N$, selon des périodes de temps $t$, et dans lequel $t$ = 1, 2, ..., $T$ est la période de temps actuelle, dans lequel le dispositif (20) comprend un module de résolution (25) raccordé à et en communication avec le module de gestion de la circulation (21), le dispositif étant **caractérisé par** ledit module de résolution (25) exécutant une solution d'optimisation en utilisant la fonction de programmation linéaire entière suivante :

$$\min \sum_{n=1}^{N} \sum_{v=1}^{V} \sum_{t=0}^{T} f(n,v,t)X_n^v(t) \qquad (1.1)$$

ladite fonction représentant la fonction objective, et les coefficients *f(n,v,t)* indiquant la distance minimale entre le noeud *n* sur lequel le véhicule *v* pourrait être situé au moment *t*, par rapport au noeud de mission du véhicule *v*, et dans lequel $X^v_n(t)$ est une variable de décision binaire définie par

$$X^v_n(t) = \begin{cases} 1 & \text{if the vehicle v is on the node n} \\ 0 & \text{otherwise} \end{cases} \qquad \forall t$$

avec les contraintes suivantes

$$\sum_n X^v_n(t) = 1 \qquad \forall v,t \qquad (1.2)$$

$$\sum_v X^v_n(t) \leq 1 \qquad \forall n,t \qquad (1.3)$$

$$X^v_n(t+1) \leq \sum_{n' \in V(n)} X^v_{n'}(t) \qquad \forall n,v,t < T \qquad (1.4)$$

qui ont le sens suivant :

la contrainte (1.2) indique que chaque véhicule doit occuper un et un seul noeud, à chaque moment de temps ;
la contrainte (1.3) impose qu'au maximum un véhicule peut être dans un noeud à chaque moment de temps ;
la contrainte (1.4) impose la structure du graphique,

*V(n)* étant l'ensemble de noeuds pouvant être atteints par l'intermédiaire d'un seul segment d'itinéraire provenant du noeud *n*.

2. Dispositif (20) pour optimiser le mouvement de véhicules à guidage automatisé selon la revendication 1, comprenant une contrainte qui exprime la situation dans laquelle le segment (*n₁, n₂*) bloque le segment (*n₃, n₄*) et est exprimé dans la forme linéaire

$$X^{v_1}_{n_1}(t) + X^{v_1}_{n_2}(t+1) + X^{v_2}_{n_3}(t) + X^{v_2}_{n_4}(t+1) \leq 3, \qquad (1.5)$$

écrite pour chaque paire de véhicules $v_1$, $v_2$ et pour chaque moment de temps *t* = 0,..., *T* - 1.

3. Dispositif (20) pour optimiser le mouvement de véhicules à guidage automatisé selon la revendication 1 ou 2, comprenant une contrainte qui exprime la situation dans laquelle le noeud k bloque le segment (n₁, n₂) et est exprimé dans la forme linéaire

$$2X^{v_1}_{n_1}(t) + 2X^{v_1}_{n_2}(t+1) + X^{v_2}_k(t) + X^{v_2}_k(t+1) \leq 4, \qquad (1.6)$$

écrite pour chaque paire de véhicules $v_1$, $v_2$ et pour chaque moment de temps *t* = 0,..., *T* - 1.

4. Dispositif (20) pour optimiser le mouvement de véhicules à guidage automatisé selon l'une quelconque des revendications précédentes, comprenant une contrainte garantissant que, en prenant deux segments incompatibles, l'ensemble des derniers segments affectés à chacun des véhicules n'est pas égal à l'un des éléments de *S*, et il est exprimé dans la forme linéaire

$$X^{v_1}_{n_1}(t_1) + \sum_{t=t_1+1}^{T} X^{v_1}_{n_2}(t) + X^{v_2}_{n_3}(t_2) + \sum_{t=t_2+1}^{T} X^{v_2}_{n_4}(t) \le 2(T+1) - t_1 - t_2 - 1 \tag{1.7}$$

écrite pour chaque paire de véhicules $v_1$, $v_2$, avec $v_1 \ne v_2$, et pour chaque paire de moments $t_1 = 0, ..., T - 1$ et $t_2 = 0, ..., T - 1$.

5. Dispositif (20) pour optimiser le mouvement de véhicules à guidage automatisé selon l'une quelconque des revendications précédentes, comprenant une contrainte qui exprime la situation dans laquelle $s$ véhicules peuvent bloquer les uns les autres, alors que $s - 1$ véhicules auraient toujours la possibilité de se déplacer le long des itinéraires respectifs, ce qui est exprimé dans la forme linéaire

$$\sum_{i=1}^{k} \left( X^{v_i}_{n_{s_i}}(t_i) + \sum_{t=t_i+1}^{T} X^{v_i}_{n_{d_i}}(t) \right) \le k(T+1) - \sum_{i=1}^{k} t_i - 1 \tag{1.8}$$

dans laquelle $n_{si}$ et $n_{di}$ représentent le noeud initial et final du ième AGV $i$, $i = 1, 2, ..., k$. La contrainte (1.8) est écrite pour chaque paire ensemble de s et pour chaque paire de moments de temps $t_i = 0, ..., T - 1$.

6. Dispositif (20) pour optimiser le mouvement de véhicules à guidage automatisé selon l'une quelconque des revendications précédentes, comprenant une contrainte qui impose que $n_x$ ne peut pas être affecté comme dernier noeud à un véhicule, par exemple le véhicule $v_2$, si un autre véhicule, par exemple $v_1$, a déjà parcouru un segment particulier, par exemple ($n_s$, $n_d$), et il est exprimé dans la forme linéaire

$$X^{v_1}_{n_s}(t_1) + \sum_{t=t_1+1}^{T} X^{v_1}_{n_d}(t) + X^{v_2}_{n_x}(T) \le T - t_1 + 1 \tag{1.9}$$

écrite pour chaque paire de véhicules $v_1$, $v_2$, avec $v_1 \ne v_2$, et pour chaque paire de moments de temps $t_1 = 0, ..., T - 1$ et $t_2 = 0, ..., T - 1$.

7. Dispositif (20) pour optimiser le mouvement de véhicules à guidage automatisé selon l'une quelconque des revendications précédentes, dans lequel la fonction $f(n,v,t)$ est déterminée de la manière suivante :

$$\mathrm{f(n,v,t) = B(n) + M(t) + D(n,v)} \tag{1.11}$$

où $B(n)$ est un paramètre supplémentaire différent de zéro si le noeud « $n$ » n'est pas un noeud de mission, $D(n, v)$ est le temps nominal pris pour parcourir l'itinéraire minimum entre le noeud « $n$ » et le noeud de mission de l'AGV « $v$ » et

$$M(t) = \begin{cases} t & \text{if } t < T \\ t(t-1) & \text{if } t = T \end{cases} \tag{1.12}$$

si n est un noeud de mission, et si le véhicule v n'a pas de mission dans le noeud n, alors c'est $f(n, v, t) = MAX\_INT$, $MAX\_INT$ étant le plus grand nombre entier qui peut être représenté par un ordinateur, empêchant ainsi un véhicule de pouvoir se diriger vers un noeud de mission différent du sien ;

si un certain véhicule (AGVn) n'a pas de mission, le module de gestion de la circulation (21) le redirige vers une position initiale, appelée *position de départ n*, définie à l'avance, ou le laisse au dernier noeud atteint ; dès que le véhicule (AGVn) atteint la position de départ n ou il reste sur le dernier noeud atteint, le coût du segment virtuel ($n$, $n$), qui représente le comportement du séjour sur le même noeud pour une période de temps, est défini à 1, alors que le coût du segment ($n$, $m$), avec $n \ne m$, est défini à 2 ; ainsi, un certain véhicule (AGVn) reste dans la position initiale s'il ne constitue pas un obstacle pour les autres véhicules ayant des missions assignées.

8. Dispositif (20) pour optimiser le mouvement de véhicules à guidage automatisé selon l'une quelconque des revendications précédentes, comprenant une règle telle que pour chaque véhicule (AGVn) sans mission, une force de répulsion est considérée depuis les noeuds de mission des autres véhicules (AGV1, AGV2, AGV3 ..., AGVn-1,...,AGVn+1, ...), afin de réduire l'interférence entre les véhicules avec une mission et les véhicules sans mission ; le coût supplémentaire par lequel le coefficient $f(n,v,t)$ d'un noeud sans mission est multiplié est donné par la formule

$$RepulsionMax - minD \cdot RepulsionCoeff \qquad (1.10)$$

où RepulsionMax et RepulsionCoeff sont les paramètres conceptuels, et minD est la distance minimale entre le noeud dans lequel le véhicule sans destination est situé et les noeuds de mission de tous les autres.

9. Dispositif (20) pour optimiser le mouvement de véhicules à guidage automatisé selon l'une quelconque des revendications précédentes, comprenant une règle telle que pour chaque véhicule (AGVn) ayant une mission, le coût supplémentaire par lequel le coefficient $f(n,v,t)$ est multiplié est :

$$f(n,v,t) = BonusForMission + {} +TimeMod(t) \cdot distance(n, Mission(v)) \qquad (1.11)$$

où BonusForMission est un paramètre supplémentaire différent de zéro si le noeud $n$ n'est pas un noeud de mission et

$$TimeMod(t) = \begin{cases} t & \text{if } t < T \\ t(t-1) & \text{if } t = T \end{cases} \qquad (1.12)$$

10. Dispositif (20) pour optimiser le mouvement de véhicules à guidage automatisé selon l'une quelconque des revendications précédentes, comprenant la règle :

si depuis le dernier changement de mission un AGV a été sur le même noeud pour des périodes de temps TSDeadlock (potentiel deadlock), ou il est passé par le même noeud plus de TS_Count fois (potentiel livelock), alors le coût devient

$$f(n,v,t) = BonusForMission + {} +TimeMod(t) \cdot MalusForDeadlock \qquad (1.13)$$

où MalusForDeadlock est un paramètre conceptuel.

11. Dispositif (20) pour optimiser le mouvement de véhicules à guidage automatisé selon l'une quelconque des revendications précédentes, comprenant une règle par laquelle pour chaque noeud de mission, l'ensemble des noeuds qui ne doivent pas être le point final du dernier segment attribué à un certain AGV est déterminé, ces noeuds étant définis comme des noeuds *sans arrêt,* la règle susmentionnée comprenant :

chaque segment s est **caractérisé par** un ensemble différent de *NOEUDS SANS ARRÊT,* indiqué par $NSN_s$ ;
$S$ est l'ensemble de tous les segments qui raccordent tous les noeuds des itinéraires possibles ;
pour chaque segment $s$ dans $S$, tous les noeuds qui sont incompatibles avec tous les successeurs de $s$ sont des *NOEUDS SANS ARRÊT* ;
si $S$ n'est pas vide

ayant extrait un segment $s$ dans $S$, et retiré de $S$, ajouter à $NSN_s$ tous les noeuds qui sont des *NOEUDS SANS ARRÊT* pour tous les successeurs de $s$, en excluant le segment inverse $(j, i)$ de $s = (i, j)$, s'il n'est pas le seul ;
si l'ensemble NSN$_s$ a changé, ajouter à *S*, s'ils ne sont pas déjà présents, tous les segments qui précèdent *s* ;

ajouter à *NSN$_s$* tous les nœuds incompatibles avec les successeurs de *s* ;
pour chaque segment *s* = (*i, j*) retirer les énièmes *NOEUDS SANS ARRÊT (n)* si
*n* coïncide avec *i*, ou avec *j*, ou est un nœud de mission ;
le trajet minimal entre *i* et *n* ajouté au paramètre de seuil (NSN_Threshold) est inférieur à la distance minimale entre *n* et *j* ;
la distance minimale entre *j* et *n* est supérieure à une certaine distance (NSN_RangeMeters).

**12.** Dispositif (20) pour optimiser le mouvement de véhicules à guidage automatisé selon l'une quelconque des revendications précédentes, comprenant un module de réaffectation (24) des missions des véhicules à guidage automatisé, ledit module de réaffectation (24) étant raccordé afin de communiquer avec le module de gestion de la circulation (21) et avec les véhicules à guidage automatisé (AGV1, AGV2, AGV3, ..., AGVn).

**13.** Dispositif (20) pour optimiser le mouvement de véhicules à guidage automatisé selon l'une quelconque des revendications précédentes, comprenant un module graphique de connexion (27), qui comprend un plan des itinéraires possibles pour les véhicules (AGV1, AGV2, AGV3 ..., AGVn).

**14.** Dispositif (20) pour optimiser le mouvement de véhicules à guidage automatisé selon l'une quelconque des revendications précédentes, dans lequel ledit module de résolution (25) fournit une solution approximative des affectations des itinéraires auxdits véhicules (AGV1, AGV2, AGV3, ..., AGVn), et dans lequel ledit module de gestion de la circulation (21) doit vérifier la compatibilité réelle de la solution et puis contrôler les affectations des segments d'itinéraire avec lesdits véhicules (AGV1,AGV2, AGV3 ..., AGVn).

**15.** Procédé pour optimiser le mouvement de véhicules à guidage automatisé (AGV1, AGV2, ..., AGVn), comprenant les étapes consistant à :

gérer le mouvement de certains véhicules à guidage automatisé (AGV1, AGV2, AGV3 ..., AGVn) sur les itinéraires d'un graphique défini par des segments et des nœuds pour raccorder les segments, lesdits véhicules à guidage automatisé étant indiqués par un nombre *v*, dans lequel *v* indique le véhicule courant, avec *v* = 1, 2, ... , *V*, lesdits nœuds étant indiqués par un nombre n, dans lequel *n* indique le nœud actuel, avec *n* = 1, 2,..., *N*, selon les périodes de temps *t*, et dans lequel *t* = 1, 2, ..., *T* est la période de temps actuelle, **caractérisé en ce qu'**il comprend une étape de solution d'optimisation dudit mouvement de certains véhicules à guidage automatisé obtenu en utilisant la fonction de programmation linéaire entière suivante :

$$\min \sum_{n=1}^{N} \sum_{v=1}^{V} \sum_{t=0}^{T} f(n,v,t,)X_n^v(t) \qquad (1.1)$$

ladite fonction représentant la fonction objective, et les coefficients *f(n, v, t)* indiquant la distance minimale entre le nœud *n* sur lequel le véhicule *v* pourrait être situé au moment *t*, par rapport au nœud de mission du véhicule *v*, et dans lequel $X_n^v(t)$ est une variable de décision binaire définie par

$$X_n^v(t) = \begin{cases} 1 & \text{if the vehicle v is on the node n} \\ 0 & \text{otherwise} \end{cases} \qquad \forall t$$

avec les contraintes suivantes

$$\sum_n X_n^v(t) = 1 \qquad \forall v,t \qquad (1.2)$$

$$\sum_v X_n^v(t) \le 1 \qquad \forall n, t \qquad (1.3)$$

$$X_n^v(t+1) \le \sum_{n' \in V(n)} X_{n'}^v(t) \qquad \forall n, v, t < T \qquad (1.4)$$

qui ont le sens suivant :

la contrainte (1.2) indique que chaque véhicule doit occuper un et un seul noeud, à chaque moment de temps ;
la contrainte (1.3) impose qu'au maximum un véhicule peut être dans un noeud à chaque moment de temps ;
la contrainte (1.4) impose la structure du graphique,

$V(n)$ étant l'ensemble de noeuds pouvant être atteints par l'intermédiaire d'un seul segment d'itinéraire provenant du noeud $n$.

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NISHI et al.** A distributed route planning method for multiple mobile robots using lagrangian decomposition technique. *International Conference about Robotics and Automation,* September 2003

- **DAMJAN MIKLIC et al.** A modular control system for warehouse automation - algorithms and simulations in USARSim. *International Conference about Robotics and Automation,* May 2012